# EUROPEAN PATENT APPLICATION

(11) **EP 1 837 161 A1**
(43) Date of publication of application: **26.09.2007**
(21) Application number: 06111708.1
(22) Date of filing: 24.03.2006
(51) Int. Cl.: B29C 65/02, B29C 65/18, B29C 65/30, B29C 65/74, B65B 51/30, B31B 19/64, C23C 16/00, B24B 1/00

(54) **Sealing Device**

(71) Applicant: Nippon Consultants B.V., 3621 XL Breukelen (NL)
(72) Inventor: Feldhoff, Helmut, 58730 Frömdemberg-Ardey (DE); Veuger, Cees, 3621 XL Breukelen (NL)
(74) Representative: Clarkson, Paul Magnus

(57) **Abstract**

A seal bar construction is disclosed for thermally joining layers of polymeric web material. The construction comprises an elongate seal bar having an extremely hard sealing surface with a Vickers hardness greater than 1000. This hard surface may be polished to have a roughness Ra of less than 10 microns. The resulting sealing surface has improved non-stick properties and can be applied directly to the polymeric web.

## Description

### BACKGROUND OF THE INVENTION

### 1. Field of the Invention

The present invention relates to sealing devices such as those used in heat seal systems for packaging purposes, in particular it relates to seal systems for sealing containers formed from a web or webs of polymeric material.

### 2. Description of the Related Art

Packaging machines are known in which a product is sealed within one or more webs of polymeric material to form a package. Such packages may take different forms such as bags, sachets, tubes, envelopes, boxes, capsules and the like. The package may be evacuated or may be provided with a particular gas filling to preserve freshness. In certain forms of packaging, the package is sealed by heating the polymeric material to its melting temperature and forming a welded joint. The sealing procedure is carried out using a heated seal bar that presses the polymeric material web against an anvil to produce the weld. Alternatively, two heated seal bars may press the webs between them.

Prior art seal bars of different forms are known. One conventional seal bar comprises a metal body having a sealing surface and a cavity extending through the length of the body. An electrical heating element is introduced into the cavity and retained there using an appropriate potting composition. Conventional electrical resistance heating elements are used comprising a coiled heating wire having a uniform distribution of coils over the length of the element. The heating element heats the metal body substantially continuously and heat is transmitted to the sealing surface. In order to ensure good heat transfer, aluminium and light metal alloys having high conductivity have been generally preferred. In order to prevent clinging of melted plastic, the sealing surface is usually covered by a PTFE layer or strip. This is of particular importance in the case of non-thermostable materials such as polyethylene (PE). The use of PTFE strips or similar coverings is nevertheless detrimental to good heat transfer from the seal bar to the material to be sealed. The strips must also be frequently checked and changed when they become worn.

Another form of seal bar is known as the impulse heating type. Rather than using a heating element located within a cavity of the seal bar, the impulse type seal bar uses an electrical heating wire applied directly along the sealing surface. The wire is covered with a thin strip of non-stick material such as PTFE. The wire is heated briefly each time that heat is required to perform a seal. Due to the cyclic nature of the heating and its exposure on the sealing surface, the wire and strip require frequent replacement. Again, the presence of the strip acts as insulation, preventing good and uniform heat transfer to the seal. As a result, temperature spikes are frequent, leading to poor seal quality. An impulse type device is known from US patent No 6,789,371 that attempts to overcome such problems by use of a seal bar manufactured of PTFE and a heating wire which is also coated with PTFE or the like. Another device is known from US patent No 5,966,909, which attempts to improve operation of a packaging machine using a seal bar made of a magnesium alloy.

The seal bars described above are conventionally used in bag forming machines in which a tubular web passes between a seal bar and anvil that together produce first and second seals. The first and second seals become respective upper and lower seals of adjacent bags. The seal bar may also be provided with a knife or the like to sever the web between the two seals.

In order to initially form the tubular web the material is sealed in the longitudinal direction to form a longitudinally extending seam. On presenting the tubular web to the seal bar, the region of the seam comprises at least three layers of material. The remainder of the tubular web may comprise only two layers. At either edge of the tubular web, the folding of the material results in an increased thickness. This variation in thickness of the material to be sealed has in the past been a cause of poor seal quality. The presence of a PTFE layer between the sealing surface and the material to be sealed has in the past precluded more careful control of the heat supply to the web.

The material for the tubular web may be chosen from a number of different polymers or laminates according to the desired properties of the final package. Exemplary materials for monolayer packaging webs include polyethylene (polyethylene PE), polypropylene (PP), oriented polypropylene (OPP), biaxially oriented polypropylene (BOPP) in both cast and blown forms) and polystyrene (PS). These materials may also be used in multilayer laminated webs comprising layers of different polymers. Other materials suitable for multilayer use include but are not limited to polyamide (PA), polyethyletherephthalate (PET), PE ionomers such as Surlyn^{™} available from Dupont, metallocenes, aluminium, ethylene vinyl alcohol (EVOH), polyvinylidene chloride (PVDC) and collagene organic films. The present invention is intended to be applicable to all such packaging materials. Non-thermostable polymers such as PE have hitherto been difficult to seal using conventional seal bars. This is particular the case when using extremely thin films or in the case that they are surface printed. For such uses, non-stick polymeric layers such as PTFE have been essential to prevent sticking. The presence of such a layer makes accurate heat control difficult and the layer must be frequently checked and periodically replaced, leading to machine downtime.

There is thus a need for an alternative sealing device that can operate to produce consistent seals while preventing melted polymer from sticking to the sealing surface. There is furthermore a need for a sealing device that can easily be controlled to ensure good seal quality even when exposed to materials of varying thickness. Such a device should be relatively cheap and simple to produce and should require a minimum of maintenance.

### BRIEF SUMMARY OF THE INVENTION

According to the invention there is provided a sealing device comprising a sealing element having a sealing surface, characterized in that the sealing surface has a Vickers hardness (HV) greater than 1000 and a roughness Ra of less than 10 microns. It has been found that as a result of the extreme hardness of the sealing surface in combination with its smooth finish, the sealing device can be used for heat-sealing polymeric web materials by direct contact, without the need for non-stick coatings or PTFE strips. As a result of such direct contact, heat transfer from the sealing element to the web is improved and the sealing surface can be maintained at lower temperatures. Although hardness greater than 1000 HV may be sufficient, values of more than 1500 HV or even above 1800 HV are preferred. For many applications even greater smoothness is preferable. Due to the hardness, extremely smooth finishes may be achieved and also maintained. Preferably, the finish has a value Ra of less than 1 micron. More preferably it may be finished to a value Ra of around 0.2 microns.

Methods for providing a hardening coating e.g. to a steel surface are well-known in the art. Preferably, the sealing surface comprises a metal compound deposited by chemical vapour deposition. In this context, it is understood that the metal compound may be present in the form of a carbide or nitride. Chrome nitride, titanium nitride and chrome carbide are especially suitable as they may provide a surface hardness of 1800 to 2000 HV. They may also be deposited in combination e.g. as distinct layers. A coating thickness on the order of 0.05 mm is preferred.

A most preferred method for providing the coating is plasma enhanced metal organic chemical vapor deposition. This technique involves injecting a vapour of an organic metal compound into a plasma of, for example, hydrogen or nitrogen. If a hydrogen plasma is used, the organometallic compound is preferably a nitrogen containing compound, for example an amino or amide compound. Carbon atoms present in the organometallic compound tend to become incorporated in the coating layer in the form of the carbide of the deposited metal. Deposition temperatures the range from 200 °C to 400 °C. Hydrogen plasma acts to remove hydrocarbon impurities from the deposited film, and any deposited carbon tends to become incorporated in the form of the metal carbide. If nitrogen is used as the plasma gas, incorporated hydrocarbon impurities in the nitride film may cause the surface to be rough. The skilled person will know how to adjust the composition of the plasma to obtain a smooth coating having the desired hardness.

According to a further preferred embodiment, the sealing element comprises a case hardened base layer located below the sealing surface. It is desirable to case harden the sealing element prior to depositing the hardened sealing surface. This treatment is important to provide a base layer that is harder than the material of the sealing element itself. If the sealing surface is deposited directly onto a relatively soft base, the difference in mechanical properties between the base and the hard surface result in a film adherence that is less than optimum. As result, the sealing surface may chip off during use.

A preferred method of forming the base layer involves subjecting it to plasma nitration, also referred to as ionitration. This technique, which is well-known in the art, involves exposing the surface to a nitrogen plasma at a temperature between 400°C and 600°C for periods ranging from 30 minutes to several days. Such methods of deposition have been found highly efficient in achieving accurate layer thickness, composition and properties, while minimizing adverse effects on the underlying material of the sealing element. In particular, by using plasma deposition, the process temperatures required may be lower than for other nitriding techniques.

An alternative method of pre-treating the sealing element is by gas nitration. Gas nitration is a technique whereby the material is exposed to a gas that decomposes into nitrogen at elevated temperature. Typical temperatures are in the range from 500 °C to 650 °C. The time of exposure ranges from about 1 hour to about six hours. In both techniques (plasma nitration and gas nitration), nitrogen diffuses into the surface of the sealing element and forms nitrides with e.g. iron molecules in the case of a steel sealing element, or with other metals in the case of other alloys. Typically, nitration treatment forms a white layer on top of a steel object. It is desirable to remove this white layer prior to the subsequent plasma enhanced chemical vapor deposition process. Other nitriding and carbiding techniques may also be employed to the extent that the desired hardness qualities may be achieved

Most preferably, the sealing element is in the form of an elongate seal bar and the sealing surface extends substantially over the length of the seal bar. Such a seal bar may be generally conventional in terms of its dimensions for incorporation into standard existing packaging machines. Such a seal bar may comprise a pair of sealing surfaces arranged generally parallel to one another, spaced by a separation zone, in which a knife or cutting element may be located. Nevertheless, it is also considered within the scope of the present invention that sealing devices of other forms may also take advantage of the enhanced properties of the sealing surface described above.

The device preferably incorporates a heating arrangement. This may be located within a channel or channels within the sealing element. The heating arrangement may comprise a conventional electrical resistance-heating element inserted with a potting compound into the channel. More preferably, the heating arrangement comprises a zoned heating element that allows localized control of the heat supply at different positions along the seal bar. Because of the direct heat transfer from the sealing element to the polymeric web, variations of heat supply along the sealing bar can result in a corresponding variation in the heat supply to the web. In prior art devices where PTFE films or strips were employed, heat conduction along the seal bar would have been greater than conduction through the strip and such longitudinal variation could not have been maintained. According to the present invention, by eliminating such PTFE strips, the user may take account of varying web thickness and other factors in order to produce a seal having the desired characteristics. It may thus be possible to heat an area of the seal to a greater extent e.g. the seam and folds. For vertically oriented seal bars, it may be possible to provide a greater supply of heat at the lower end than at the upper end, to compensate for convection effects.

According to an important aspect of the present invention, the sealing element may comprise predominantly steel. In the past, lighter alloys such as aluminium have been used in order to benefit e.g. from lower inertia (both mechanical and thermal). It has however been found most beneficial in the context of the present invention to use steel grades in the range from 1.1730 to 1.2379 as such materials provide a desirable combination in terms of heat capacity and heat conductivity. Heat capacity greater than 2500 KJ/m3.K is preferred. In the present context, "comprise predominantly steel" is intended to denote that the part of the sealing element relevant to the sealing procedure is formed of steel. Clearly, there may be provided connection elements, sensors, heating elements etc formed of other materials.

The invention also provides for a method of manufacturing a sealing device, the method comprising providing a sealing element; forming a sealing surface comprising a metal on a surface of the sealing element by chemical vapour deposition, the sealing surface having a Vickers hardness greater than 1000; and finishing the sealing surface to have a roughness of less than Ra =10 microns, or even less than 1 micron.

The method preferably further comprises forming a case hardened base layer on the surface of the sealing element prior to depositing the sealing surface. The case hardened layer may be formed by plasma nitration as described above.

The method also preferably comprises depositing chrome nitrate, titanium nitrate or most preferably chrome carbide to form the sealing surface, in particular by plasma enhanced metal organic chemical vapor deposition as also described above.

Preferably, the finishing of the sealing surface is performed by mechanical polishing. This may take place using a non-corrosive polishing medium. Scotch Brite^{™} polishing products are suitable for this purpose. The resulting surface is extremely smooth, and its nonstick properties are such that even thermo-unstable surface printed polyethylene foils of only 30 micrometer thickness can be sealed at a relatively low temperature of about 120 °C and a contact time of about 200 microseconds. Other polishing techniques may also be employed including electrolytic polishing.

The invention also relates to the provision of a packaging machine, the packaging machine being operable to feed a web of polymeric material past a sealing device of the type described above and to move the sealing element to exert heat and pressure on the web to cause sealing of the web to itself or to another item.

The invention is also considered to cover a method of thermally joining layers of polymeric web material, the method comprising applying heat and pressure to the polymeric web material using a sealing element having a sealing surface with a Vickers hardness greater than 1000. Such a method of sealing is considered to be novel over prior art methods that have made use of relatively soft non-stick polymer layers. The method is especially applicable to the above mentioned thermo-unstable PE foils.

Prior art seal bars as described above, included PTFE strips forming the sealing surface in order to prevent sticking. It was also frequent that such seal bars were used in combination with an anvil having a resilient pad. The resiliency of the PTFE strip or the pad would serve to better distribute the pressure over the full sealing surface. As a consequence of removing the PTFE strip or other similar coating, and sealing directly between metal surfaces, higher actuation tolerances may be required. According to a further important aspect of the invention, the sealing device may further comprise a resilient mounting for transmission of the sealing pressure to the sealing element during use. This is especially desirable in cases of relatively old and worn packaging machines where the tolerance of the seal bar actuators may be low. The resilient mounting may take the form of a thin layer of resilient material on the rear surface of the seal element or anvil. Alternatively, the resiliency may be provided on the surface of the actuator or within the actuator mechanism itself.

By use of the seal bar as described according to the present invention, considerable advantages may be achieved. In particular: the seal temperature required for effective sealing may be reduced by 30-35 °C; the seal time may be halved; the cooling time for the seal may be reduced by 30-50%; contamination of the seal bar by burned polymer is reduced and the maintenance interval for the sealing machine may be increased from 2-5 days to more than a month.

### BRIEF DESCRIPTION OF THE DRAWINGS

Further features and advantages of the invention will be appreciated upon reference to the following drawings of a number of exemplary embodiments, in which:

Figure 1 shows a cross-sectional view through a conventional permanent heat-seal seal bar construction;

Figure 2 shows a cross-sectional view through a seal bar construction according to the present invention;

Figure 3 shows a perspective view of a seal bar construction according to a further aspect of the present invention;

Figure 4 shows a longitudinal cross-section through the seal bar of Figure 3 along line 4-4; and

Figure 5 shows a cross-sectional detail of the sealing surface of the seal bar construction of Figure 2.

### DESCRIPTION OF ILLUSTRATIVE EMBODIMENTS

The following is a description of certain embodiments of the invention, given by way of example only and with reference to the drawings.

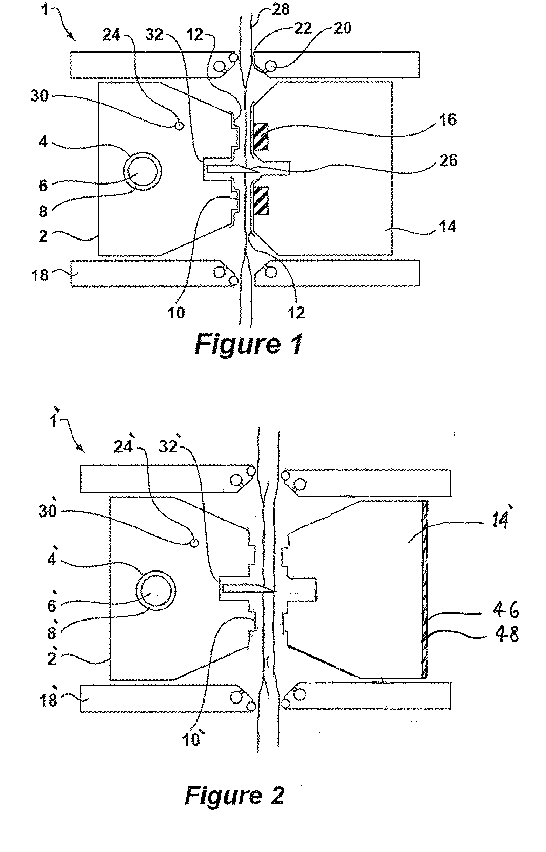

Figure 1 shows a cross-sectional view through a seal bar construction 1 as conventionally used in packaging machines of the bag forming type. The seal bar construction 1 comprises a generally elongate seal bar 2 having a channel 4 extending therethrough. A heating element 6 is located within the channel 4 and retained by means of a conventional heat conducting potting composition 8. A pair of sealing surfaces 10 are formed on one face of the seal bar. The sealing surfaces 10 are covered by a PTFE tape 12 to prevent melted material from becoming adhered to the surface of the seal bar. An anvil 14 is provided facing the seal bar 2. The anvil 14 is provided with rubber jaws 16 aligned with sealing surfaces 10. The rubber jaws 16 are also covered with PTFE tape 12. Web supports 18 are located on either side of both the seal bar 2 and anvil 14. The web supports 18 are provided with cooling air channels 20 having outlets 22. A temperature sensor 24 is located in a passage 30 in the body of the seal bar 2 and a knife 26 is supported in a groove 32 between the two sealing surfaces 10 such that it protrudes towards the anvil 14.

In use, the seal bar 2 is continuously heated by the heating element 6 to a temperature of around 170 - 190 °C. A web 28 of packaging material is fed between the seal bar 2 and the anvil 14. At a desired sealing position, the seal bar construction 1 is activated to cause the seal bar 2 and anvil 14 to move towards one another. Actuation takes place by actuators (not shown) of the packaging machine that act on the rear surface of the seal bar 2. The web 28 is severed by the knife 26 as the sealing surfaces 10 form a pair of seals by heating of the web material and pressure against the rubber jaws 16 of the anvil 14. The resilience of the rubber jaws 16 and the PTFE strip 12 ensure that the pressure is distributed substantially equally over the full length of the seal despite low tolerances of the actuators. Cooling air is supplied through channels 20 and outlets 22 to quickly cool the web 28 to a temperature at which the seal is stable. In certain arrangements, a second seal bar similar to seal bar 2 is employed instead of anvil 14.

Figure 2 shows a seal bar construction 1' according to the present invention. Elements corresponding to those described in relation to Figure 1 are provided with like reference numerals. Unlike the seal bar construction 1, the seal bar construction 1' does not require PTFE tape. The sealing surfaces 10' are treated as described below to produce a hardened and polished layer having a Vickers hardness of at least 1000. Anvil 14' is provided with a resilient layer 46 on its rear surface 48.

Operation of the seal bar 2' according to Figure 2 is substantially the same as that of the prior art. Due to the absence of PTFE sealing strip or other materials between the seal bar 2' and the web 28, substantially lower temperatures may be used for sealing. This results in a reduction in the required energy and also lower sealing and cooling-off times. The resulting seal is also generally of a higher and more consistent quality. Actuation of the seal bar 2' to apply pressure to form the seal causes direct pinching of the seal by the hardened sealing surface 10'. Any inaccuracies in such actuation would cause the sealing surfaces 10' and their counterparts on the anvil 14' not to meet in a parallel manner. This would also result in a variation in the pressure applied to the seal. The resilient layer 46 on the rear surface 48 of the anvil 14' serves to ensure equal pressure distribution by allowing the anvil 14' to float slightly with respect to the seal bar 2'.

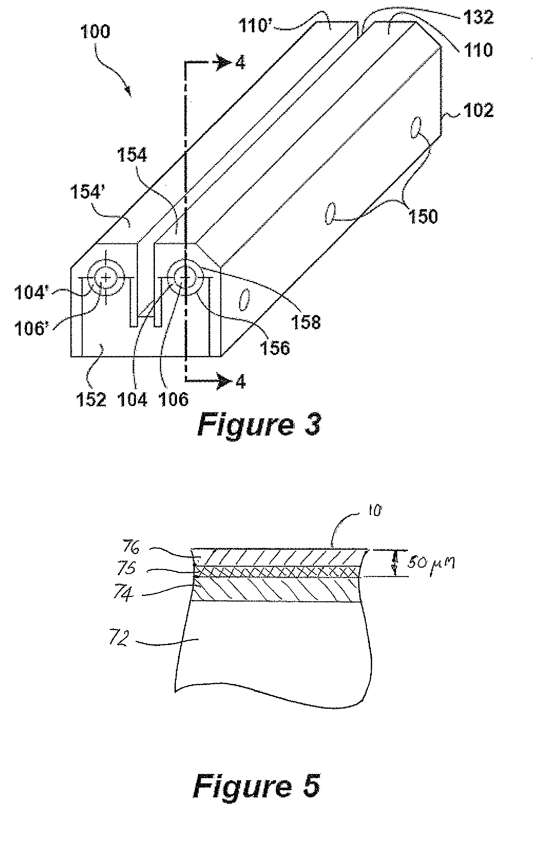

Turning to Figure 3, there is shown a seal bar construction 100 according to a further embodiment of the present invention. Elements corresponding to those described in relation to Figures 1 and 2 are provided with like reference numerals in the range from 100 to 200. As above, the seal bar construction 100 may form part of a packaging machine for bagging or otherwise enclosing a product.

The seal bar construction 100 comprises a generally elongate seal bar 102 having similar external dimensions to the prior art seal bars described above. A pair of channels 104, 104' extend through the length of the seal bar 102. Heating elements 106, 106' are located within the channels 104, 104'. A pair of sealing surfaces 110, 110' are formed on one face of the seal bar. The sealing surfaces are provided with a hardened nitride surface according to the invention. As a result of this surface, no additional sealing strips or PTFE layers are required. The seal bar 102 is arranged to engage with a second similar seal bar but may also engage with an anvil as described previously . Fastening bores 150 are provided for joining web supports on either side of the seal bar 102. A groove 132 is located between the two sealing surfaces 110, 110' for receipt of a suitable knife.

Unlike the seal bar constructions of Figures 1 and 2, seal bar 102 is constructed in a number of separate parts. This aspect is the subject of co-pending application number EP05111865.1 filed 8th December 2005. In this example, there is provided a block 152 and a pair of head elements 154, 154' each having its respective sealing surface 110, 110'. The channel 104 is formed partially as a recess 156 in the block 152 and partially as a complementary recess 158 in the head element 154.

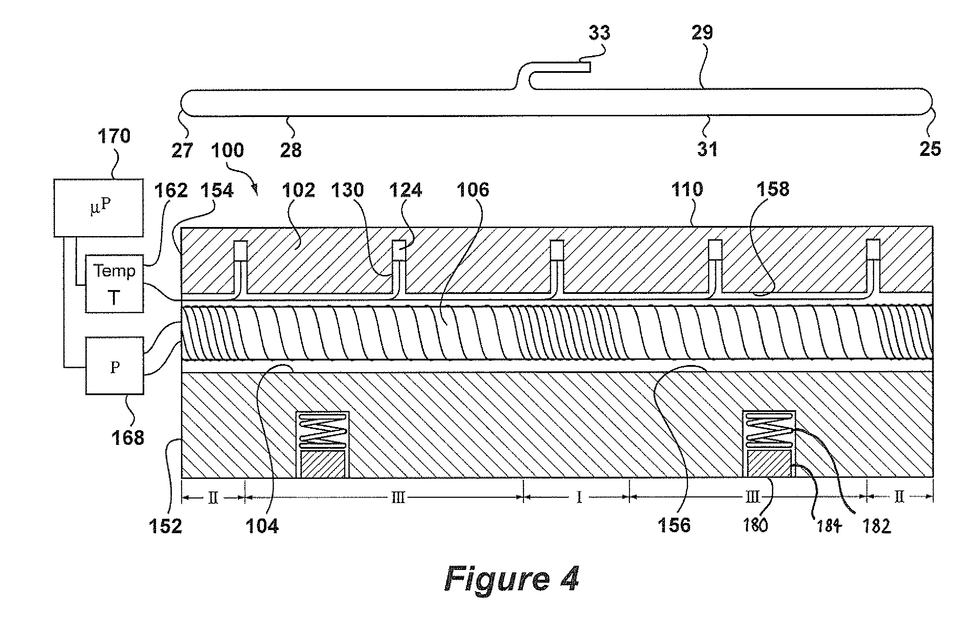

Figure 4 shows a longitudinal cross-section along line 4-4 of Figure 3. In this view, the extension of the heating element 106 and channel 104 throughout the length of the seal bar 102 is visible. In this view also, five blind bores 130 for receipt of temperature sensors 124 can be seen. The blind bores 130 extend upwards from the upper surface of complementary recess 158 and terminate just short of the sealing surface 110. Each temperature sensor 124 is thus located as close as possible to the sealing surface 110 and can accurately record the local temperature of the head element 154 at that point. An appropriate connection 160 connects the temperature sensors 124 to a temperature register 162.

From Figure 4, it can be seen that the heating element 106 comprises a winding 164. The winding 164 is of the electrical resistance type. It may be noted that although a clearance is shown between the heating element and the channel 104, in reality, these elements are in intimate contact with one another. According to a further feature of the present invention, the heating element 106 is divided into a number of zones. In a first central zone I, the winding 164 has a first high winding density. In second zones II, located at either end of the heating element, the winding 164 has a second lower winding density. In intermediate zones III between the zones I and II, the winding 164 has a third low winding density. The winding 164 is supplied by electrical connections 166 from an electrical supply 168. Both the electrical supply 168 and the temperature register 162 are connected to a control unit 170 which both monitors and controls operation of the heating element 106 and sensors 124. The control unit 170 may form part of the overall control of the packaging machine in which the seal bar 102 is located. Alternatively, it may be an independent element, with or without interface to the packaging machine controls.

According to Figure 4, a further inventive aspect is also illustrated. In the base 152 of the seal bar, are located a pair of resilient actuator mounts 180. The actuator mounts 180 comprise springs 182 and plates 184. During operation, the seal bar will be located within a packaging machine for actuation by appropriate actuators (not shown). The actuator mounts 180 are positioned to receive the actuators. The springs 182 are calibrated such that on actuation of the seal bar the correct sealing pressure is applied over the full length of the seal bar 102. Any variation or inaccuracy in the actuator mechanism may then be compensated for by the resilience of the springs 182. Although the actuator mounts 180 are illustrated in a seal bar construction according to the present invention, it is noted that such resilient mounting may also be applied to prior art seal bar and anvil constructions as shown in Figures 1 and 2.

Use of the seal bar 102 is substantially similar to that of the seal bar 2 of Figures 1 and 2. A web 28 of packaging material is fed between the seal bar 102 and a second similar seal bar (not shown). As can be seen, the web 28 is folded at edges 25, 27 to form two layers 29, 31. The web 28 is joined to itself at a seam 33 to form a tube. The zone I is aligned with the seam 33 where four layers of material overlap. The zones II are aligned with the edges 25, 27 where the web is folded. The zones III are aligned with intermediate regions of the web 28 where only the two layers 29, 31 of material are present. The heating element 106 is continuously heated by supply of electrical current from electrical supply 168. Because of the variation in winding density, the heat produced in the region I is greater than that produced in regions II, which is in turn greater than that in region III. Due to the form of the web 28, the heat adsorbed to melt and seal the seam 33 is greater than that required to seal the edges 25, 27, which is in turn greater than the heat needed to seal the two layer regions 29, 31. By balancing the heat supply to the heat required a rather lower temperature of around 150 °C - 160 °C can be maintained at the sealing surfaces 110, 110'. Despite the lower temperature, adequate heat is supplied to ensure sealing of the seam 33 without melting through other two layer regions. This variation of effective heat supply over the length of the seal bar 102 is made possible by the sealing surface according to the present invention. Because sealing takes place directly from the sealing surfaces 110, 110' of the seal bar 102 without interposition of a separate polymeric non-stick layer or the like, any gradient of heat supply along the seal bar 102 is also transmitted directly to the web 28. In the prior art arrangement of Figure 1, the presence of the PTFE tape 12 would have precluded this possibility. Any variation in heat supply would have been negated by heat conduction along the seal bar 2 without its effect being transmitted to the web 28.

Actuation of the seal bars 102 to apply pressure to form the seal causes direct pinching of the seal between the two hardened sealing surfaces. Any inaccuracies in such actuation would cause the sealing surfaces 110, 110' and their counterparts not to meet in a parallel manner. This would also result in a variation in the pressure applied to the seal. The actuator mounts 180 serve to ensure equal pressure distribution by allowing the seal bars 102 to float slightly with respect to one another.

During operation of the seal bar 102, the temperature register 162 and sensors 124 can continuously monitor the correct temperature of the sealing surface. In the event that overheating occurs in one region, corrective measures may be taken to adjust the heating supply 168. It is noted that in alternative embodiments, the heating element 106 may comprise regions that can be selectively heated independently of one another under appropriate control of the control unit 170.

Figure 5 shows a cross-sectional detail of a sealing surface 10 of the seal bar construction 1 of Figures 2. According to Figure 2, the seal bar comprises a substrate 72 formed of steel. The steel is of a grade in the range 1.1730 to 1.2379. On the substrate is provided a base layer 74 having a thickness of around 0.1 mm. The base layer 74 is formed of nitrides of the iron and the other metals forming the substrate 72. It is itself rather hard (around 1300 HV) and has a surface roughness in the micron range making it accessible for adhesion by further layers. The base layer 74 is applied by standard plasma nitration procedures at between 400 °C and 600 °C. The relatively low deposition temperature avoids adverse effects on the structure of the seal bar itself. On the base layer 74 is provided a chromium nitride intermediate layer 75 followed by a chromium carbide top layer 76. The chromium carbide top layer 76 has a Vickers hardness of greater than 1800 HV and is approximately 50 microns thick. Both the intermediate 75 and top layer 76 are deposited by plasma enhanced metal organic chemical vapor deposition. For the top layer 76, a vapour of an organic chromium compound is injected into a hydrogen plasma. Carbon atoms present in the organometallic compound become incorporated in the base layer 74 in the form of chromium carbide. Deposition temperature may range from 200 °C to 400 °C. A similar procedure is used for the intermediate layer 75. The actual sealing surface 10 is formed on an upper surface of the chrome carbide layer 76 by polishing thereof with Scotch Brite^{™} to achieve a surface roughness of less than Ra = 0.63 microns.

Thus, the invention has been described by reference to the embodiment discussed above. It will be recognized that this embodiment is susceptible to various modifications and alternative forms well known to those of skill in the art. Many modifications in addition to those described above may be made to the structures and techniques described herein without departing from the spirit and scope of the invention. Accordingly, although specific embodiments have been described, these are examples only and are not limiting upon the scope of the invention.

## Claims

1. A sealing device for thermally joining layers of polymeric web material, the sealing device comprising a sealing element having a sealing surface, **characterized in that** the sealing surface has a Vickers hardness greater than 1000 and a roughness Ra of less than 10 microns, preferably less than 1 micron.

2. The device as claimed in claim 1, wherein the sealing surface comprises a metal compound deposited by chemical vapour deposition.

3. The device as claimed in claim 1 or claim 2, wherein the sealing element comprises a case hardened base layer located below the sealing surface.

4. The device as claimed in claim 3, wherein the case hardened base layer comprises a nitride layer.

5. The device as claimed in any preceding claim, wherein the sealing surface comprises chromium nitride, titanium nitride and/or preferably chrome carbide.

6. The device as claimed in any preceding claim, wherein the sealing element is in the form of an elongate seal bar and the sealing surface extends substantially over the length of the seal bar.

7. The device as claimed in claim 6, wherein the seal bar comprises a pair of sealing surfaces arranged generally parallel to one another, spaced by a separation zone.

8. The device as claimed in any preceding claim, wherein the sealing element comprises predominantly steel.

9. The device as claimed in any preceding claim, further comprising a heating arrangement.

10. A method of manufacturing a sealing device, the method comprising:
providing a sealing element;
forming a sealing surface comprising a metal compound on a surface of the sealing element by chemical vapour deposition, the sealing surface having a Vickers hardness greater than 1000;
finishing the sealing surface to have a roughness Ra of less than 10 microns, preferably less than 1 micron.

11. The method of claim 10, further comprising forming a case hardened base layer on the sealing element prior to depositing the sealing surface thereon.

12. The method as claimed in claim 11, wherein the case hardened layer is formed by plasma nitration.

13. The method according to any of claims 10 to 12, wherein the sealing surface comprises chrome nitride, titanium nitride and/or preferably chrome carbide.

14. The method according to any of claims 10 to 13, wherein the sealing surface is deposited by plasma enhanced metal organic chemical vapor deposition.

15. The method according to any of claims 10 to 14, wherein the finishing of the sealing surface is performed by mechanical polishing.

16. A method of thermally joining layers of polymeric web material, the method comprising applying heat and pressure to the polymeric web material using a sealing element having a sealing surface with a Vickers hardness greater than 1000.

17. A packaging machine comprising a sealing device according to any of claims 1 to 9.
